Europäisches Patentamt

European Patent Office

Office européen des brevets

(11) Veröffentlichungsnummer: **0 053 578**
**A1**

(12) # EUROPÄISCHE PATENTANMELDUNG

(21) Anmeldenummer: **81810402.8**

(22) Anmeldetag: **07.10.81**

(51) Int. Cl.³: **F 16 B 17/00**

(30) Priorität: **28.11.80 CH 8849/80**

(43) Veröffentlichungstag der Anmeldung: **09.06.82**
Patentblatt **82/23**

(84) Benannte Vertragsstaaten: **AT BE CH DE FR GB IT LI NL SE**

(71) Anmelder: **Schweizerische Aluminium AG, CH-8212 Neuhausen am Rheinfall (CH)**

(72) Erfinder: **Bucher, Anton, Ehrendingerstrasse 84, CH-5400 Ennetbaden (CH)**

(54) **Halterung für Ankerschiene zur Aufnahme einer klappbaren Ladebrücke.**

(57) Halterung (10) an einer Verladerampe oder an einem Schutzprofil derselben, wobei mehrere solche Halterungen in einer bestimmten Höhenlage in vorzugsweise gleichmässigen Abständen voneinander entfernt an der Rampe oder an einem Schutzprofil der Rampe befestigt sind.

Halterung für Ankerschiene zur Aufnahme einer klappbaren Ladebrücke

Die vorliegende Erfindung bezieht sich auf eine Halterung
für eine Ankerschiene zur Aufnahme einer klappbaren Ladebrücke an einer Verladerampe oder an einem Schutzprofil derselben, wobei mehrere solche Halterungen in einer bestimmten
Höhenlage in vorzugsweise gleichmässigen Abständen voneinander entfernt an der Rampe oder einem Schutzprofil der Rampe befestigt sind.

Bekannt sind beispielsweise Halterungen für eine Ankerschiene, an welcher beispielsweise eine Klappbrücke verschieb-
und klappbar gelagert sein kann. Solche Ankerschienen aus
Stahl oder aus Leichtmetall werden entweder mit einem an der
Rampe befindlichen Schutzprofil direkt verschweisst oder
dort, wo dieses fehlt, durch gespreizte Verankerungslaschen
mittels Mörtel in der Betonplatte fest verankert. Ankerschienen aus einer Aluminiumlegierung wurden beispielsweise zumeist in ihrem oberen Bereich in an der Rampe befestigte
hakenförmige Halteelemente eingehängt und in ihrem unteren
Bereich mit Hilfe einer Klemmplatte und einem in ein Gewinde
eines Schutzprofiles zum Festklemmen der Platte einschraubbaren Schraubenbolzen an dem Schutzprofil befestigt. - Die in
vorbestimmten gleichen Abständen in derselben Höhenlage an
dem Schutzprofil befestigten Anhängehaken sind so ausgebildet,
dass diese den verhältnismässig hohen Belastungsanforderungen
mit ausreichender Sicherheit genügen. Bei der Befestigung
einer derartigen, beispielsweise 6 m langen Ankerschiene ist
jedoch besonders zu beachten, dass trotz der unterschiedlichen Ausdehnungskoeffizienten von Beton zu Stahl einerseits und der vorzugsweise aus einem Alu-Werkstoff bestehenden Ankerschiene andererseits eine freie Dehnung der Ankerschiene bei unterschiedlichen Temperaturen erfolgen kann, und dass gegebenenfalls beschädigte Ankerschienen leicht ersetzt werden können.

Als nachteilig hat sich besonders die Montage der in Abständen voneinander an dem oberen Rand einer Rampe angeordneten hakenförmigen Halteelemente sowie der Klemmplatten wegen der Vielzahl der Befestigungsstellen erwiesen, da hier meistens einem Halteelement eine Klemmplatte zugeordnet ist und die vorbestimmten Abstände zwischen einem Halteelement und einer Klemmplatte sehr massgenau einzuhalten sind.

Der vorliegenden Erfindung liegt nunmehr die Aufgabe zugrunde, eine Halterung für eine Ankerschiene, insbesondere an einer Rampe einer Ladebrücke vorzusehen, mit welcher die den bereits bekannten Halterungen anhaftenden vorbeschriebenen Nachteile vermieden werden bzw. die Montagearbeiten für die Anbringung der Halterungen an einer Rampe wesentlich einfacher und mit weniger Aufwand an Befestigungsmitteln als bisher ausgeführt werden können.

Erfindungsgemäss wird die Aufgabe dadurch gelöst, dass jeweils eine aus einem Stück gefertigte Halterung mindestens zwei Befestigungsstellen für die Ankerschiene aufweist. - In einer bevorzugten Ausgestaltung der Halterung sind die Befestigungsstellen in einem vertikalen Abstand voneinander angeordnet.

Weitere vorteilhaft Ausgestaltungsformen des Erfindungsgegenstandes sind aus der nachfolgenden Beschreibung im Zusammenhang mit der Zeichnung zu entnehmen.

Die Zeichnung zeigt zwei Ausführungsbeispiele der Erfindung in vereinfachter Darstellungsweise, und zwar:

0053578

Fig. 1 ein erstes Ausführungsbeispiel einer Haltung in der Vorderansicht,

Fig. 2 einen Schnitt durch die Halterung gemäss der Linie II-II in der Fig. 1,

Fig. 3 ein zweites Ausführungsbeispiel einer Halterung in der Seitenansicht.

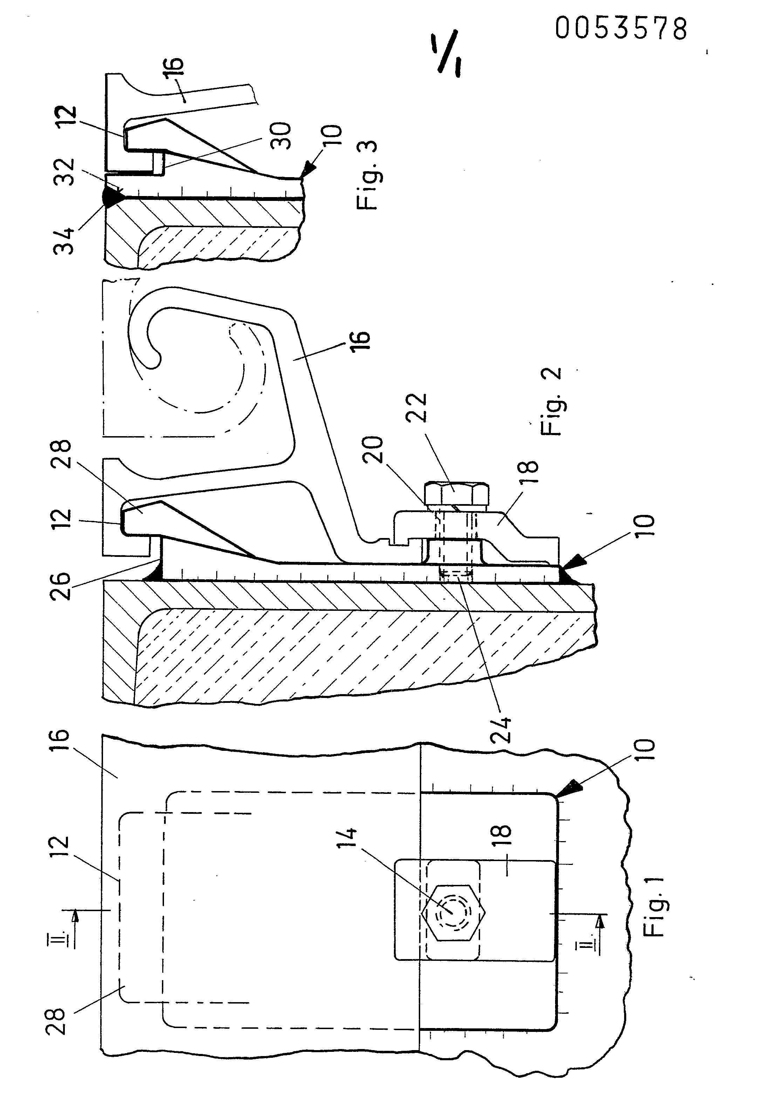

Gemäss den Figuren 1-3 weist die aus einem Stück gefertigte Halterung 10 mindestens zwei Befestigungsstellen 12 und 14 für eine Ankerschiene 16 auf. Die Befestigungsstellen sind bevorzugterweise in einem vertikalen Abstand entfernt voneinander angeordnet. Während die obere Befestigungsstelle 12 der Halterung 10 hakenförmig ausgebildet ist, weist diese an der unteren Befestigungsstelle 14 eine Klemmplatte 18 auf, mit welcher die Ankerschiene 16 mit der Halterung 10 fest verklemmbar ist. - Die Ankerschiene dient, wie bereits eingangs erwähnt, der Aufnahme einer mit einer strichpunktierten Linie gezeichneten klappbaren Ladebrücke.

In einer bevorzugten Ausführungsform ist die Klemmplatte 18 mit einer durchgehenden Bohrung 20 versehen, durch welche ein Schraubenbolzen 22 hindurchgeführt und in eine Gewindebohrung 24 der Halterung 10 zwecks Verklemmung der Ankerschiene 16 mit derselben einschraubbar ist.

Gemäss dem in den Figuren 1 und 2 gezeigten ersten Ausfüh- rungsbeispiel einer Halterung 10 ist an derselben im oberen Bereich eine parallel zur Seitenwand der Rampe verlaufende Ausnehmung 26 vorgesehen, durch welche an der Halterung 10 eine Hervorhebung 28 verbleibt, in welche die in bekannter Weise im oberen Bereich hakenförmig ausgebildete Ankerschiene 16 eingehängt werden kann.

0053578

Die Halterungen 10 sind in einer derartigen Höhenlage vorzugsweise in gleichmässigen Abständen voneinander entfernt an der Seitenwand einer Verladerampe oder an einem Schutzprofil derselben befestigt worden, dass die Lauffläche der Ladebrücke in ihrer Betriebstellung mit der Lauffläche der Rampe · flüchtet. - Als Laufflächen sind hier Flächen zu verstehen, auf welchen Transportmittel bewegt werden.

An Stelle der Ausnehmung 26 kann gemäss der Figur 3 auch eine Nut 30 im oberen Bereich der Halterung 10 angeordnet sein, in welche die Ankerschiene 16 eingehängt wird. Diese Nut 30 verläuft horizontal und parallel zur Seitenwand der Rampe.

Weiterhin weist die aus einem Stück gefertigte Halterung 10 an ihrem oberen Bereich eine der Seitenwand der Rampe gegenüberstehende schräg geneigte Kantenfläche 32 auf, welche in besonders vorteilhafter Weise der Aufnahme einer Schweissraupe 34 zwischen der Seitenwand der Rampe und der schräg geneigten Kantenfläche 32 der Halterung 10 dient.

Die vorliegende Erfindung ist nicht auf die in den Figuren 1 bis 3 gezeigten Ausführungsbeispiele beschränkt. Im Sinne der Erfindung ist es durchaus möglich, die Halterung 10 bzw. die Befestigungsstellen derselben anders auszugestalten, wenn dieses erwünscht ist.

Mit der Hilfe der erfindungsgemässen Halterung ist es nunmehr möglich geworden, die Montage derselben an Verladerampen in bemerkenswerter Weise zu vereinfachen.

Patentansprüche

1. Halterung für Ankerschiene zur Aufnahme einer klappbaren Ladebrücke an einer Verladerampe oder an einem Schutzprofil derselben, wobei mehrere solcher Halterungen in einer bestimmten Höhenlage in vorzugsweise gleichmässigen Abständen voneinander entfernt an der Rampe oder einem Schutzprofil derselben befestigt sind,

dadurch gekennzeichnet,

dass jeweils eine aus einem Stück gefertigte Halterung (10) mindestens zwei Befestigungsstellen (12 und 14) für die Ankerschiene (16) aufweist.

2. Halterung nach dem Anspruch 1, dadurch gekennzeichnet, dass die Halterung (10) in einem vertikalen Abstand voneinander angeordnete Befestigungsstellen (12 und 14) aufweist.

3. Halterung nach den Ansprüchen 1 und 2 dadurch gekennzeichnet, dass die obere Befestigungsstelle (12) hakenförmig ausgebildet ist.

4. Halterung nach Anspruch 3, dadurch gekennzeichnet, dass an der unteren Befestigungsstelle (14) eine Klemmplatte (18) angeordnet ist, mit welcher die Ankerschiene (16) mit der Halterung (10) fest verklemmbar ist.

5. Halterung nach Anspruch 4, dadurch gekennzeichnet, dass die Klemmplatte (18) eine Bohrung (20) aufweist, durch welche ein Schraubenbolzen (22) hindurchgeführt und in eine Gewindebohrung (24) der Halterung (10) zwecks Verklemmung der Ankerschiene (16) mit der Halterung (10) einschraubbar ist.

6. Halterung nach den Ansprüchen 1 und 3, dadurch gekennzeichnet, dass die aus einem Stück gefertigte Halterung
(10) an ihrem oberen Bereich eine parallel zur Rampe
verlaufende Nut (30) aufweist. (Fig. 3)

57. Halterung nach den Ansprüchen 1 und 3, dadurch gekennzeichnet, dass die aus einem Stück gefertigte Halterung
(10) an ihrem oberen Bereich eine parallel zur Seitenwand der Rampe verlaufende Ausnehmung (26) aufweist.

8. Halterung nach den Ansprüchen 1 und 6 dadurch gekennzeichnet, dass die aus einem Stück gefertigte Halterung
an ihrem oberen Bereich eine schräg geneigte Kantenfläche (32) aufweist.

28  II.  12  16

14

18

II.

Fig. 1

10

26  12  28

16

20

22

24  18

Fig. 2

10

34  32  12

16

30

10

Fig. 3

0053578

0053578

Nummer der Anmeldung

EP 81 81 0402.8

Europäisches
Patentamt

**EUROPÄISCHER RECHERCHENBERICHT**

| Kategorie | EINSCHLÄGIGE DOKUMENTE | | KLASSIFIKATION DER ANMELDUNG (Int. Cl.³) |
|---|---|---|---|
| | Kennzeichnung des Dokuments mit Angabe, soweit erforderlich, der maßgeblichen Teile | betrifft Anspruch | |
| Y | DE - B2 - 2 307 696 (BRATSCHI) <br> * Fig. 5 * | 1,6 | F 16 B 17/00 |
| Y | DE - A1 - 2 626 808 (LINDSAY) <br> * Fig. 4 * | 1,4,7 | |
| Y | BE - A - 694 207 (ALUMINIUM LABORATORIES) <br> * Fig. 1 * | 1 | |
| Y | US - A - 3 325 132 (OLSON) <br> * Fig. 3 * | 1-3,5 | RECHERCHIERTE SACHGEBIETE (Int. Cl.³) |
| Y | US - A - 3 513 518 (LEKAN) <br> * Fig. 2 * | 1,4,5 | F 16 B 2/00 <br> F 16 B 5/00 <br> F 16 B 7/00 <br> F 16 B 17/00 |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| Der vorliegende Recherchenbericht wurde für alle Patentansprüche erstellt. |
|---|

| Recherchenort | Abschlußdatum der Recherche | Prüfer |
|---|---|---|
| Berlin | 16-02-1982 | ZAPP |

EPA form 1503.1 06.78